# EUROPÄISCHE PATENTSCHRIFT

(11) **EP 3 900 156 B1**
(45) Veröffentlichungstag und Bekanntmachung des Hinweises auf die Patenterteilung: **24.07.2024**
(21) Anmeldenummer: 20706953.5
(22) Anmeldetag: 10.02.2020
(51) Int. Cl.: H02K 1/16, H02K 1/26, H02K 17/16

(54) **BLECHPAKET FÜR EINE ELEKTRISCHE MASCHINE**
SHEET PACKAGE FOR AN ELECTRIC MACHINE
NOYAU FEUILLETÉ POUR UNE MACHINE ÉLECTRIQUE

(30) Priorität: 06.03.2019 EP 19161065
(43) Veröffentlichungstag der Anmeldung: 27.10.2021
(73) Patentinhaber: Siemens Aktiengesellschaft, 80333 München (DE)
(72) Erfinder: SCHUNK, Holger, 97461 Lendershausen (DE)
(74) Vertreter: Siemens Patent Attorneys
(86) Internationale Anmeldenummer: PCT/EP2020/053314
(87) Internationale Veröffentlichungsnummer: WO 2020/177984

(56) Entgegenhaltungen:
- CN-U- 207 134 882
- DE-A1- 102014 111 239
- DE-A1- 102016 114 569
- JP-A- S61 285 037
- US-A- 5 349 742
- US-A1- 2004 212 256
- US-A1- 2011 210 692

## Beschreibung

Die Erfindung betrifft ein Blechpaket für einen Läufer und/oder einen Ständer einer einen Luftspalt zwischen dem Läufer und dem Ständer aufweisenden rotierenden elektrischen Maschine, mit in einer Umfangsrichtung des Blechpakets nebeneinander angeordneten Zähnen, welche Nuten zur Aufnahme von wenigstens einem wenigstens eine Wicklung bildenden elektrischen Leiter begrenzen, und einer luftspaltseitig angeordneten Abdeckeinheit, die die Nuten in radialer Richtung begrenzt, wobei die Abdeckeinheit in einem Bereich einer jeweiligen Nut wenigstens einen Verjüngungsbereich aufweist, in welchem ein Material der Abdeckeinheit in einer radialen Richtung des Blechpakets dünner als in einem an diesen Verjüngungsbereich angrenzenden Bereich der Abdeckeinheit ist. Darüber hinaus betrifft die Erfindung auch einen Ständer für die rotierende elektrische Maschine sowie einen Läufer für die rotierende Maschine. Schließlich betrifft die Erfindung eine rotierende elektrische Maschine mit einem Ständer und einem in einer Öffnung des Ständers drehbar gelagert angeordneten Läufer, wobei der Ständer vom Läufer durch einen Luftspalt beabstandet ist.

Gattungsgemäße elektrische Maschinen, Läufer und Ständer sowie auch Blechpakete hierfür, sind dem Grunde nach im Stand der Technik umfänglich bekannt, so dass es eines gesonderten druckschriftlichen Nachweises hierfür nicht bedarf. Bei einer rotierenden elektrischen Maschine handelt es sich um eine Vorrichtung, die in einem Motorbetrieb elektrische Energie in mechanische Energie, insbesondere Bewegungsenergie, und/oder in einem Generatorbetrieb mechanische Energie in eine elektrische Energie umwandelt. Bei der Bewegung handelt es sich in der Regel um eine Drehbewegung, die vom Läufer gegenüber dem Ständer ausgeführt wird. Der Ständer ist - im Unterschied zum Läufer - in der Regel drehfest angeordnet, das heißt, bei der Drehbewegung handelt es sich um eine Drehbewegung des Läufers gegenüber dem Ständer.

Bei der rotierenden elektrischen Maschine ist in der Regel der Ständer als Stator vorgesehen, der üblicherweise eine im Wesentlichen kreisförmige Öffnung zur Aufnahme des als Rotor ausgebildeten Läufers bereitstellt. In der Öffnung ist der Läufer um eine Drehachse des Läufers drehbar gelagert angeordnet, wobei zwischen dem Läufer und dem Ständer ein Luftspalt ausgebildet ist. Die Drehachse entspricht häufig auch einer Längsachse des Läufers beziehungsweise der elektrischen Maschine oder des Ständers.

Der Ständer und der Läufer sind im bestimmungsgemäßen Betrieb der elektrischen Maschine mittels eines magnetischen Flusses verkettet, wodurch im Motorbetrieb die Kraftwirkung, nämlich das Drehmoment, erzeugt wird, die den Läufer gegenüber dem Ständer drehend antreibt. Im Generatorbetrieb wird die dem Läufer zugeführte mechanische Energie in Form einer Rotation beziehungsweise eines Drehmoments in elektrische Energie umgewandelt. Zu diesem Zweck weisen der Ständer und der Läufer in der Regel jeweils eine von einem elektrischen Strom durchflossene Wicklung auf. Im Ständer oder im Läufer kann die Wicklung auch durch einen Permanentmagneten gebildet oder durch einen solchen ergänzt sein.

Rotierende elektrische Maschinen der gattungsgemäßen Art sind beispielsweise Drehfeldmaschinen, die an ein mehrphasiges, insbesondere dreiphasiges, elektrisches Wechselspannungsnetz angeschlossen sind, wie beispielsweise eine Asynchronmaschine, eine Synchronmaschine, eine Synchronmaschine mit Dämpferkäfig oder dergleichen, oder auch Gleichstrommaschinen, wie Nebenschluss- oder Reihenschlussmaschinen oder dergleichen.

Der Läufer und/oder der Ständer der rotierenden elektrischen Maschine weist üblicherweise ein Blechpaket auf. Das Blechpaket ist in der Regel aus einem ferromagnetischen permeablen Material gebildet, so dass es den magnetischen Fluss gut zu führen vermag. Häufig besteht das Blechpaket aus einer Mehrzahl von einzelnen, untereinander elektrisch isolierten ferromagnetischen Blechen. Jedoch kann das Blechpaket auch aus einem anderen ferromagnetischen Material gebildet sein, beispielsweise einem Ferrit, oder dergleichen. Werden Bleche verwendet, können die Bleche je nach Verwendungszweck auch als Dynamoblech, Motorenblech, Transformatorenblech oder dergleichen bezeichnet sein. Derartige Bleche sind von der Normung erfasst, beispielsweise EN 10106, EN 10107 oder dergleichen.

Das Blechpaket bildet luftspaltseitig in eine Umfangsrichtung, die mit einer Rotationsrichtung des Läufers im bestimmungsgemäßen Betrieb der elektrischen Maschine zusammenfällt und die quer zur Längsrichtung ist, axiale Zähne aus, die sich häufig im Wesentlichen in Längsrichtung erstrecken, das heißt, dass sie sich in der Regel im Wesentlichen parallel zu einer Drehachse des Läufers erstrecken. Die Zähne bilden dadurch Nuten, die zur Aufnahme des wenigstens einen Läufers der wenigstens einen Wicklung dienen. Durch die wenigstens eine Wicklung kann zumindest ein Teil des magnetischen Flusses bereitgestellt werden, der für den bestimmungsgemäßen Betrieb der rotierenden elektrischen Maschine erforderlich ist. Elektrische Maschinen mit derartigen Nuten sind beispielsweise aus der US 2011 / 210 692 A1, aus der DE 10 2014 111 239 A1, aus der US 2004 / 212 256 A1, aus der US 5 349 742 A sowie aus der DE 10 2016 114 569 A1 bekannt. Die genannten Anmeldungen zeigen dabei auch unterschiedliche Formgebungen der Nuten. Der Ständer nimmt in der Regel eine Reaktion in Bezug auf ein Läuferdrehmoment auf und stützt sich gegen eine Auflage ab, an der der Ständer drehfest befestigt ist. Die Abstützung kann durch ein Fundament oder dergleichen gebildet sein.

Das Blechpaket bezeichnet also einen aus ferromagnetischem Material hergestellten und damit magnetisierbaren, vorzugsweise schichtweise aufgebauten, Körper. Die Aufgabe des Blechpakets besteht unter anderem darin, in Verbindung mit wenigstens einer stromdurchflossenen Wicklung den magnetischen Fluss zu führen beziehungsweise zu bündeln.

Je nach Konstruktion der rotierenden elektrischen Maschine kann das Blechpaket sowohl läuferseitig als auch ständerseitig vorgesehen sein. Auch eine Kombination, bei der ständerseitig und läuferseitig ein Blechpaket vorgesehen ist, ist möglich.

Die Zähne erstrecken sich in der Regel in eine Längsrichtung des Läufers beziehungsweise des Ständers. Obwohl deren Längsachse häufig parallel zur Drehachse des Läufers ist, kann die Orientierung der Erstreckung der Zähne auch von der Orientierung der Drehachse des Läufers beziehungsweise der Längsrichtung abweichen, beispielsweise bei einer geschrägten Ausführung.

Üblicherweise weist das Blechpaket eine luftspaltseitig angeordnete Abdeckeinheit auf, die die durch die Zähne gebildeten Nuten in radialer Richtung luftspaltseitig begrenzt. Dadurch ist es möglich, beispielsweise beim Läufer, den in der Nut angeordneten elektrischen Leiter im bestimmungsgemäßen Betrieb der rotierenden elektrischen Maschine zu fixieren und/oder dergleichen.

Dadurch kann luftspaltseitig im Bereich der Nut ein gegenüber der magnetischen Leitfähigkeit des Blechpakets reduzierte magnetische Leitfähigkeit erreicht werden, wodurch die Funktion der rotierenden elektrischen Maschine verbessert ist.

Erfindungsgemäß weist die Abdeckeinheit in einem Bereich der jeweiligen Nut wenigstens einen Verjüngungsbereich auf, in welchem das Material der Abdeckeinheit, welches erfindungsgemäß dem Material des Blechpakets entspricht, in einer radialen Richtung des Blechpakets dünner als in einem an diesen Verjüngungsbereich angrenzenden Bereich der Abdeckeinheit ist. Dadurch kann erreicht werden, dass das Material der Abdeckeinheit im bestimmungsgemäßen Betrieb der rotierenden elektrischen Maschine an dem Verjüngungsbereich zuerst in eine Sättigung gerät, wenn ein entsprechender magnetischer Fluss geführt werden soll. Dies kann zur verbesserten Wirkung der rotierenden elektrischen Maschine genutzt werden.

Besonders bei Asynchronmaschinen hat sich gezeigt, dass sich im bestimmungsgemäßen Betrieb eine unerwünschte Drehmomentwelligkeit einstellen kann. Um dies zu reduzieren, ist es häufig vorgesehen, die durch die Zähne gebildeten Nuten geschrägt auszubilden, um dadurch einen besseren Drehmomentswelligkeitswert beziehungsweise eine reduzierte Drehmomentwelligkeit erreichen zu können.

Der Drehmomentswelligkeitswert kann unter anderem von der Anzahl und der Gestaltung der durch die wenigstens eine Wicklung gebildeten Pole des Läufers beziehungsweise des Ständers abhängig sein. Durch die Schrägung der Nuten kann der Drehmomentswelligkeitswert im bestimmungsgemäßen Betrieb der rotierenden elektrischen Maschine beziehungsweise Asynchronmaschine reduziert werden. Die Schrägung hat jedoch den Nachteil, dass hierdurch ein Drehmomentverlust zu verzeichnen ist, der zum Beispiel etwa 3% bis etwa 5% betragen kann.

Darüber hinaus kann das Schrägen der Nuten dazu führen, dass ein Grenzmoment bei einer Asynchronmaschine in einem Feldschwächbereich reduziert ist. Daraus ergibt sich, dass zum Beispiel eine Grenzleistung und damit auch ein Beschleunigungsvermögen entsprechend reduziert sein können.

Der Erfindung liegt die Aufgabe zugrunde, die Drehmomentwelligkeit im bestimmungsgemäßen Betrieb der rotierenden elektrischen Maschine zu reduzieren, und zwar vorzugsweise unabhängig von einer Schrägung von Nuten.

Als Lösung werden mit der Erfindung ein Blechpaket, ein Ständer, ein Läufer sowie eine rotierende elektrische Maschine gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Blechpaket wird mit der Erfindung insbesondere vorgeschlagen, dass im Bereich der jeweiligen Nut wenigstens zwei in Umfangsrichtung des Blechpakets voneinander beabstandete Verjüngungsbereiche ausgebildet sind.

In Bezug auf einen gattungsgemäßen Ständer wird insbesondere vorgeschlagen, dass der Ständer ein Blechpaket gemäß der Erfindung aufweist.

In Bezug auf einen gattungsgemäßen Läufer wird insbesondere vorgeschlagen, dass der Läufer ein Blechpaket gemäß der Erfindung aufweist.

Bezüglich einer gattungsgemäßen rotierenden elektrischen Maschine wird insbesondere vorgeschlagen, dass der Ständer und/oder der Läufer gemäß der Erfindung ausgebildet ist.

Die Erfindung basiert unter anderem auf dem Gedanken, dass die Drehmomentwelligkeit von der Anzahl der Verjüngungsbereiche abhängig sein kann. Im Stand der Technik ist für eine jeweilige der Nuten jeweils ein einziger Verjüngungsbereich vorgesehen. Hieraus kann sich jedoch eine große Drehmomentwelligkeit im bestimmungsgemäßen Betrieb der rotierenden elektrischen Maschine ergeben. Dadurch, dass gemäß der Erfindung nunmehr für eine jeweilige Nut wenigstens zwei voneinander beabstandete Verjüngungsbereiche vorgesehen sind, kann die Drehmomentwelligkeit entsprechend reduziert werden. Die Reduzierung der Drehmomentwelligkeit kann also erreicht werden, ohne dass eine Schrägung der Nuten erforderlich wäre. Dies erlaubt es, dass die mit der Schrägung verbundenen Nachteile, insbesondere auf die Leistungsfähigkeit in Bezug auf die rotierende elektrische Maschine, besonders bei Asynchronmaschinen, weitgehend vermieden werden können. Je nach Konstruktion des Blechpakets können natürlich auch mehr als zwei Verjüngungsbereiche beabstandet voneinander pro Nut vorgesehen sein. Durch die Anzahl der Verjüngungsbereiche kann die Drehmomentwelligkeit entsprechend weiter reduziert werden.

Die Abdeckeinheit kann radial außenseitig an den Zähnen angeordnet sein. Dabei kann vorgesehen sein, dass die Abdeckeinheit die Zähne in Richtung des Luftspalts vollständig bedeckt. Insbesondere kann die Form der Nut in Richtung des Luftspalts vollständig durch die Formgebung der Abdeckeinheit gegeben sein. Mit anderen Worten kann radial außenseitig der Nuten ausschließlich die Abdeckeinheit angeordnet sein. Dies bedeutet, dass die Nuten in Richtung des Luftspalts ausschließlich durch die Abdeckeinheit begrenzt sein können.

Auch wenn es gemäß der Erfindung nicht mehr erforderlich ist, eine Schrägung vorzusehen, kann die Erfindung natürlich dennoch auch mit einer Schrägung kombiniert sein, um beispielsweise weitere besondere technische Effekte erreichen zu können. Insgesamt kann mit der Erfindung erreicht werden, dass die Belastbarkeit beziehungsweise Leistungsfähigkeit der rotierenden elektrischen Maschine verbessert werden kann.

Der Verjüngungsbereich erstreckt sich vorzugsweise in Umfangsrichtung und in die Längserstreckungsrichtung der Nut. In Umfangsrichtung ist die Abmessung des Verjüngungsbereichs vorzugsweise kleiner als die Breite der jeweiligen Nut.

Der Verjüngungsbereich der Abdeckeinheit ist somit ein Bereich, der sich vorzugsweise in die Längserstreckungsrichtung der jeweiligen Nut erstreckt und in dem ein in Längserstreckungsrichtung und in radialer Richtung bereitgestellter Materialquerschnitt kleiner als in unmittelbar in Umfangsrichtung benachbarten Bereichen ist.

Insgesamt können die Verjüngungsbereiche vorzugsweise im Wesentlichen gleich ausgebildet sein. Je nach Maschinenkonstruktion beziehungsweise Konstruktion des Blechpakets kann jedoch auch vorgesehen sein, dass die wenigstens zwei Verjüngungsbereiche auch voneinander abweichend ausgebildet sind. Dadurch kann der magnetische Fluss im bestimmungsgemäßen Betrieb der rotierenden elektrischen Maschine gezielt bedarfsgerecht beeinflusst werden.

Die Erfindung ermöglicht es also, ohne in äußere mechanische Abmessungen der rotierenden elektrischen Maschine eingreifen zu müssen, die Drehmomentwelligkeit reduzieren beziehungsweise zugleich die Leistungsfähigkeit der rotierenden elektrischen Maschine entsprechend erhöhen zu können.

Die Abdeckeinheit kann einstückig mit den Zähnen ausgebildet sein. Sie kann aber auch als separates Bauteil ausgebildet sein und vorzugsweise luftspaltseitig an den jeweiligen Zähnen befestigt sein. Die Abdeckeinheit kann also zum Beispiel mehrteilig ausgebildet sein, beispielsweise indem ein Element der Abdeckeinheit für einen jeweiligen Zahn vorgesehen ist und an diesem luftspaltseitig anordbar ist. Zu diesem Zweck kann vorgesehen sein, dass die Abdeckeinheit nach einer Montage der wenigstens einen Wicklung an den Zähnen luftspaltseitig befestigt wird, beispielsweise mittels einer Schraubverbindung, einer Klebverbindung, einer Schweißverbindung und/oder dergleichen.

Ferner wird vorgeschlagen, dass die Abdeckeinheit jeweils wenigstens einen der wenigstens zwei Verjüngungsbereiche in einem Bereich einer jeweiligen sich radial und in einer Längsrichtung des Blechpakets erstreckenden Nutenwand einer jeweiligen Nut aufweist. Dadurch sind die Verjüngungsbereiche im Bereich der jeweiligen Nutenwände einer jeweiligen Nut angeordnet und voneinander weit beabstandet. Dadurch kann eine besonders günstige Reduktion der Drehmomentwelligkeit bereits mit lediglich zwei Verjüngungsbereichen erreicht werden. Natürlich können konstruktionsabhängig auch weitere Verjüngungsbereiche vorgesehen sein.

Eine Weiterbildung schlägt vor, dass die Abdeckeinheit luftspaltseitig für jede der Nuten einen Nutenspalt aufweist, der sich in einer Längserstreckungsrichtung der jeweiligen Nut erstreckt, wobei die Abdeckeinheit den Nutenspalt der jeweiligen Nut vorzugsweise mittig in Bezug auf eine Breite der Nut in Umfangsrichtung aufweist. Die Abdeckeinheit stellt vorzugsweise luftspaltseitig für jede der Nuten einen Nutenspalt bereit, der sich in Längserstreckungsrichtung der jeweiligen Nut erstreckt. Der Nutenspalt kann als weiterer Luftspalt ausgebildet sein und dann vorzugsweise mit dem Luftspalt der elektrischen Maschine verbunden sein. Daneben kann im Nutenspalt zumindest teilweise auch ein nicht ferromagnetisches Material angeordnet sein. Der Verjüngungsbereich erstreckt sich vorzugsweise nicht nur in Umfangsrichtung und in die Längserstreckungsrichtung der Nut, sondern insbesondere in Richtung des Nutenspalts, besonders bevorzugt parallel hierzu.

Dadurch kann erreicht werden, dass die Wirkung der Erfindung im Wesentlichen unabhängig von der Drehrichtung des Läufers gegenüber dem Ständer sein kann. Besonders vorteilhaft erweist es sich, wenn die erfindungsgemäße Abdeckeinheit an einem Läufer angeordnet ist. Aber auch bei einem Ständer können sich hierdurch Vorteile ergeben. Darüber hinaus kann die Abdeckeinheit auf diese Weise symmetrisch in Bezug auf ihre Positionierung an einem jeweiligen der Zähne ausgebildet sein, insbesondere wenn die Abdeckeinheit mehrteilig ausgebildet ist.

Weiterhin wird vorgeschlagen, dass die Verjüngungsbereiche durch eine eckige Kontur der Abdeckeinheit ausgebildet sind. Die eckige Kontur erlaubt es, die Abdeckeinheit einfach und kostengünstig herzustellen.

Weiterhin wird vorgeschlagen, dass die Verjüngungsbereiche durch eine kurvige Kontur der Abdeckeinheit ausgebildet sind. Die kurvige kann zum Beispiel eine Krümmung mit einem konstanten oder auch einem variablen Radius gebildet sein oder dergleichen. Natürlich kann die kurvige Kontur auch mit der eckigen Kontur kombiniert ausgebildet sein. Die kurvige Kontur erlaubt es, insbesondere die mechanische Belastbarkeit beziehungsweise Festigkeit der Abdeckeinheit zu verbessern. Insbesondere kann die Stabilität der Abdeckeinheit verbessert werden, so dass gerade bei Anwendung bei einem Läufer eine hohe Belastbarkeit erreicht werden kann.

Weiterhin wird vorgeschlagen, dass das Material der Abdeckeinheit in der radialen Richtung des Blechpakets im Bereich der Verjüngungsbereiche einer jeweiligen Nut dünner als in einem Bereich des Nutenspalts für diese Nut ist. Dadurch kann erreicht werden, dass bei einem im Wesentlichen homogenen Material für die Abdeckeinheit eine Sättigung des Materials aufgrund der Einwirkung des magnetischen Flusses im Bereich des Nutenspalts gegenüber der Verjüngung verbessert ist. Durch diese Konstruktion kann erreicht werden, dass die Sättigung zuerst im Bereich der Verjüngung auftritt. Insgesamt kann dadurch die Reduktion der Drehmomentwelligkeit weiter verbessert werden.

Weiterhin wird vorgeschlagen, dass das Material der Abdeckeinheit zumindest im Bereich der jeweiligen Verjüngungsbereiche eine kleinere ferromagnetische Permeabilität als die Zähne aufweist. Dem Grunde nach kann die Abdeckeinheit insgesamt natürlich eine kleinere ferromagnetische Permeabilität als die der Zähne aufweisen. Dadurch kann die Führung des magnetischen Flusses durch das Blechpaket weiter optimiert werden. Darüber hinaus kann für die Abdeckeinheit ein Material eingesetzt werden, welches erst bei einer größeren magnetischen Flussdichte als das Material der Zähne Sättigungseffekte zeigt. Dadurch können Verluste im Bereich der Abdeckeinheit reduziert werden.

Eine Weiterbildung sieht vor, dass in einem axialen Querschnitt durch das Blechpaket die jeweilige Nut durch zwei Seiten eines gedachten Dreiecks begrenzt ist, wobei Ecken einer weiteren, dritten Seite des gedachten Dreiecks kongruent mit luftspaltseitigen Ecken der jeweiligen Nut sind und eine Höhe des gedachten Dreiecks parallel und partiell identisch zu einer geometrischen radialen Schwerpunktlinie der jeweiligen Nut in dem axialen Querschnitt verläuft und wobei eine Spitze des gedachten Dreiecks vom Luftspalt weg zeigt. Vorzugsweise ist das gedachte Dreieck gemäß einem gleichschenkligen geformt. Erfindungsgemäß ist in einem axialen Querschnitt durch das Blechpaket die jeweilige Nut durch gleich lange Schenkel des gedachten gleichschenkligen Dreiecks begrenzt, wobei Ecken einer Basis des gedachten Dreiecks kongruent mit luftspaltseitigen Ecken der jeweiligen Nut sind und eine Höhe des gedachten Dreiecks parallel und partiell identisch zu einer geometrischen radialen Schwerpunktlinie der jeweiligen Nut in dem axialen Querschnitt verläuft und wobei eine Spitze des gedachten Dreiecks vom Luftspalt weg zeigt. Mit anderen Worten wird die jeweilige Nut zum Luftspalt hin durch die zwei Seiten beziehungsweise Schenkel des gedachten Dreiecks begrenzt. Die an die dritte Seite beziehungsweise die Basis des Dreiecks angrenzenden Ecken des Dreiecks sind dabei insbesondere kongruent zu denjenigen Ecken der jeweiligen Nut, welche dem Luftspalt am nächsten sind. Kongruent kann im vorliegenden Kontext deckungsgleich beziehungsweise positionsgleich bedeuten. Im Falle eines gleichschenkligen gedachten Dreiecks entspricht die dritte Seite der Basis. Die Begrenzung an den zwei Seiten beziehungsweise Schenkeln des Dreiecks kann durch das Blechpaket, insbesondere die Abdeckeinheit, bereitgestellt sein. Diese Form ermöglicht eine besonders gute Leitung des magnetischen Flusses durch das Blechpaket.

Eine Weiterbildung sieht vor, dass in einem axialen Querschnitt durch das Blechpaket, insbesondere die Abdeckeinheit, eine luftspaltseitige Begrenzung der jeweiligen Nut V-förmig ausgeformt ist und eine radiale Ausdehnung der jeweiligen Nut zu den Rändern der V-förmigen Begrenzung hin zunimmt. Die V-förmige Begrenzung kann insbesondere durch die zwei Seiten beziehungsweise Schenkel des gedachten Dreiecks gebildet sein. Daher ist auch hierdurch eine besonders gute Leitung des magnetischen Flusses durch das Blechpaket ermöglicht.

Eine Weiterbildung sieht vor, dass die Begrenzung an dem gedachten Dreieck beziehungsweise die luftspaltseitige Begrenzung der jeweiligen Nut teilweise oder vollständig durch die Abdeckeinheit bereitgestellt ist. Somit kann in manchen Ausführungsformen die entsprechende Begrenzung nur teilweise durch die Abdeckeinheit und zusätzlich teilweise durch ein anderes Element des Blechpakets bereitgestellt sein. In anderen Ausführungsformen ist die entsprechende Begrenzung vollständig durch die Abdeckeinheit bereitgestellt. Hierdurch lässt sich die Leitung des magnetischen Flusses jeweils vorteilhaft an den Einzelfall anpassen.

Gemäß einer Weiterbildung ist vorgesehen, dass in einem axialen Querschnitt durch das Blechpaket die Abdeckeinheit im Bereich der jeweiligen Nut zumindest näherungsweise entsprechend eines Dreiecks, optional unterbrochen durch einen in radialer und axialer Richtung ausgerichteten Nutenspalt, ausgestaltet ist, wobei eine Seite des Dreiecks zumindest im Wesentlichen parallel zu der Umfangsrichtung des Blechpakets verläuft und zwei andere Seiten des Dreiecks in die jeweilige Nut hineinzeigen. Mit anderen Worten kann das Dreieck, entsprechend welchem die Abdeckeinheit geformt ist, durch den Nutenspalt unterbrochen beziehungsweise geteilt sein. Somit kann sich das genannte Dreieck aus zwei durch den Nutenspalt beabstandeten kleineren Dreiecken zusammensetzen. Zumindest im Wesentlichen parallel zur Umfangsrichtung bedeutet im obigen Sinne, dass die Ausrichtung des Dreiecks eine möglichst parallele Ausrichtung zur Umfangsrichtung aufweist. Aufgrund der Krümmung der Umfangsrichtung ist dies jedoch nur näherungsweise möglich. Beispielsweise kann die entsprechende Seite des Dreiecks entsprechend einer durchschnittlichen Ausrichtung der Empfangsrichtung in dem Bereich des Dreiecks ausgerichtet sein. Das hier beschriebene Dreieck kann dem oben beschriebenen gedachten Dreieck, insbesondere hinsichtlich dessen Lage und Orientierung, entsprechen. Durch die hier beschriebene Form der Abdeckeinheit kann der magnetische Fluss noch besser geleitet werden.

Das Dreieck, entsprechend welchem die Abdeckeinheit im Bereich der jeweiligen Nut ausgestaltet ist, kann vorteilhafterweise ein gleichschenkliges Dreieck sein. In diesem Fall verläuft eine Basis des gleichschenkligen Dreiecks parallel zu der Umfangsrichtung des Blechpakets und zwei Schenkel des Dreiecks zeigen in die jeweilige Nut hinein, wobei insbesondere der Nutenspalt parallel und partiell deckungsgleich zur Höhe des Dreiecks verläuft. Somit kann auch im Falle des gleichschenkligen Dreiecks dieses dem oben genannten gedachten Dreieck, insbesondere hinsichtlich dessen Lage und Orientierung, entsprechen. Diese Weiterbildung basiert auf der Erkenntnis, dass eine symmetrische, im Falle des gleichschenkligen Dreiecks, oder asymmetrische Ausgestaltung im Einzelfall eine verbesserte Leitung des magnetischen Flusses zur Folge haben kann.

Die für das erfindungsgemäße Blechpaket angegebenen Vorteile und Wirkungen gelten gleichermaßen auch für den erfindungsgemäßen Ständer, den erfindungsgemäßen Läufer sowie die erfindungsgemäße elektrische Maschine und umgekehrt.

Weitere Vorteile, Wirkungen und Merkmale ergeben sich aus der folgenden Beschreibung von Ausführungsbeispielen anhand der beigefügten Figuren. In den Figuren bezeichnen gleiche Bezugszeichen gleiche Merkmale und Funktionen.

Es zeigen:
- FIG 1: eine schematische Schnittansicht einer rotierenden elektrischen Maschine entlang einer Drehachse eines Läufers der rotierenden elektrischen Maschine, der drehbar gegenüber einem Ständer gelagert ist,
- FIG 2: einen Ausschnitt einer schematischen Schnittdarstellung der rotierenden elektrischen Maschine gemäß FIG 1 in einer radialen Richtung quer zur Drehachse gemäß einer ersten Ausgestaltung eines Blechpakets des Läufers,
- FIG 3: einer schematischen Schnittdarstellung der rotierenden elektrischen Maschine gemäß FIG 1 wie FIG 2 in einer radialen Richtung quer zur Drehachse gemäß einer zweiten Ausgestaltung eines Blechpakets des Läufers,
- FIG 4: eine schematische Schnittdarstellung wie FIG 2 mit Feldlinien zur Darstellung eines magnetischen Flusses in einem bestimmungsgemäßen Betrieb gemäß der ersten Ausgestaltung des Blechpakets des Läufers,
- FIG 5: eine schematische Schnittdarstellung wie FIG 3 mit Feldlinien zur Darstellung eines magnetischen Flusses in einem bestimmungsgemäßen Betrieb gemäß der zweiten Ausgestaltung des Blechpakets des Läufers, und
- FIG 6: eine einer schematischen Schnittdarstellung wie FIG 3 für eine dritte Ausgestaltung eines Blechpakets des Läufers.

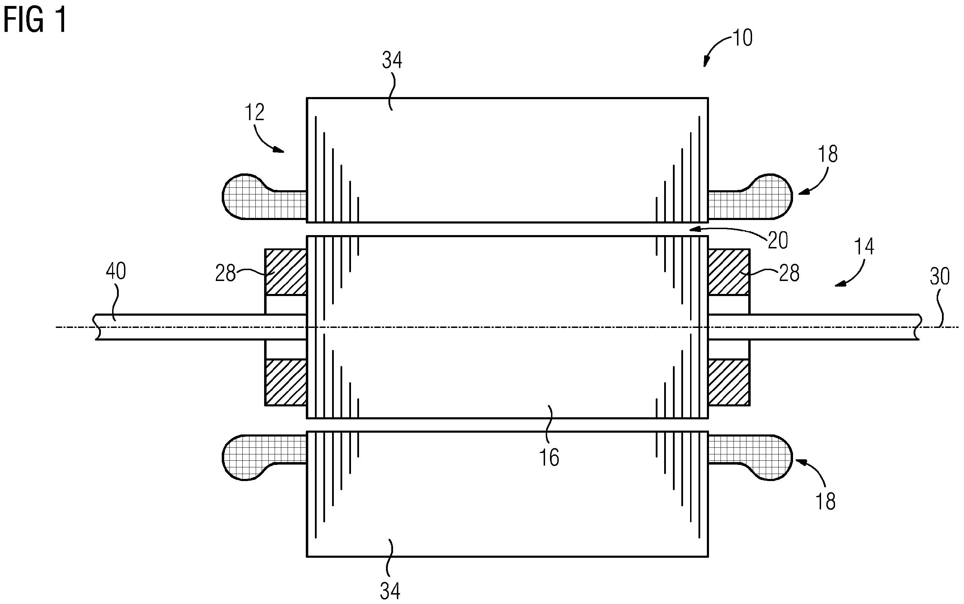

FIG 1 zeigt in einer schematischen Schnittdarstellung eine Asynchronmaschine 10 als rotierende elektrische Maschine, die für einen Anschluss an ein dreiphasiges Wechselspannungsnetz ausgebildet ist und die einen Ständer 12 aufweist, der drehfest angeordnet ist. Der Ständer 12 weist eine nicht bezeichnete zentrale Durchgangsöffnung auf, in der ein Läufer 14 um eine Drehachse 30 drehbar gelagert angeordnet ist.

Der Ständer 12 weist ferner ein Ständerblechpaket 34 auf, in welchem durch in eine Umfangsrichtung 56 angeordnete Zähne 22 des Ständerblechpakets 34 Nuten 26 ausgebildet sind, die sich im Wesentlichen parallel zur Drehachse 30 erstrecken. Bei alternativen Ausgestaltungen können die Zähne auch geschrägt angeordnet sein.

In den Nuten 26 ist ein elektrischer Leiter 36 schematisch dargestellt angeordnet. Der elektrische Leiter 36 bildet eine Ständerwicklung aus. Die Ständerwicklung ist somit im Ständerblechpaket 34 angeordnet. In FIG 1 sind von der Ständerwicklung längsseitig über das Ständerblechpaket 34 hinausragende Wicklungsköpfe 18 sichtbar. Der Schnitt in FIG 1 ist vorliegend ein Längsschnitt entlang der Drehachse 30 eines Läufers 14, der vorliegend als Käfigläufer ausgebildet ist und der in der nicht bezeichneten Durchgangsöffnung des Ständerblechpakets 34 angeordnet ist.

Der Läufer 14 ist in der Asynchronmaschine 10 drehbar angeordnet und über eine nicht weiter dargestellte Lagerung, die zum Beispiel durch Lagerschilde gebildet sein kann, gegenüber dem Ständer 12 in seiner Position drehbar festgelegt. Im montierten Zustand ist zwischen dem Ständer 12 und dem Läufer 14 ein Luftspalt 20 ausgebildet.

Der Läufer 14 ist im bestimmungsgemäßen Betrieb der Asynchronmaschine 10 um eine Drehachse 30 drehbar.

Der Läufer 14 weist ein Läuferblechpaket 16 auf, welches einen elektrischen Leiter 38 umfasst, der eine nicht weiter bezeichnete Läuferwicklung darstellt. Die elektrischen Leiter 38 sind vorliegend als Stäbe ausgebildet, die an den stirnseitigen Enden des Läuferblechpakets 16 mittels Kurzschlussringen 28 kurzgeschlossen sind. Dadurch sind die elektrischen Leiter 38 elektrisch miteinander gekoppelt, um Käfige zu bilden.

Der Läufer 14 weist ferner eine Läuferwelle 40 auf, die zur mechanischen Verbindung mit einer rotierbaren mechanischen Einrichtung dient. Die rotierbare mechanische Einrichtung kann eine beliebige Funktion aufweisen, beispielsweise eine Antriebsfunktion für eine Industriemaschine, ein elektrisch antreibbares Kraftfahrzeug und/oder dergleichen. Darüber hinaus kann die mechanische Einrichtung natürlich auch eine Verbrennungskraftmaschine, ein Windrad und/oder dergleichen sein. Je nach Betriebsart kann dem Käfigläufer 14 mechanische Energie in Form einer Drehbewegung beziehungsweise eines Drehmoments zugeführt werden, so dass die Asynchronmaschine 10 in einem Generatormodus betrieben werden kann. Sie kann durch über das an ihr angeschlossene elektrische Energieversorgungsnetz jedoch auch elektrische Energie beziehen und über den Läufer 14 und die Läuferwelle 40 ein Drehmoment in einem Motorbetrieb bereitstellen.

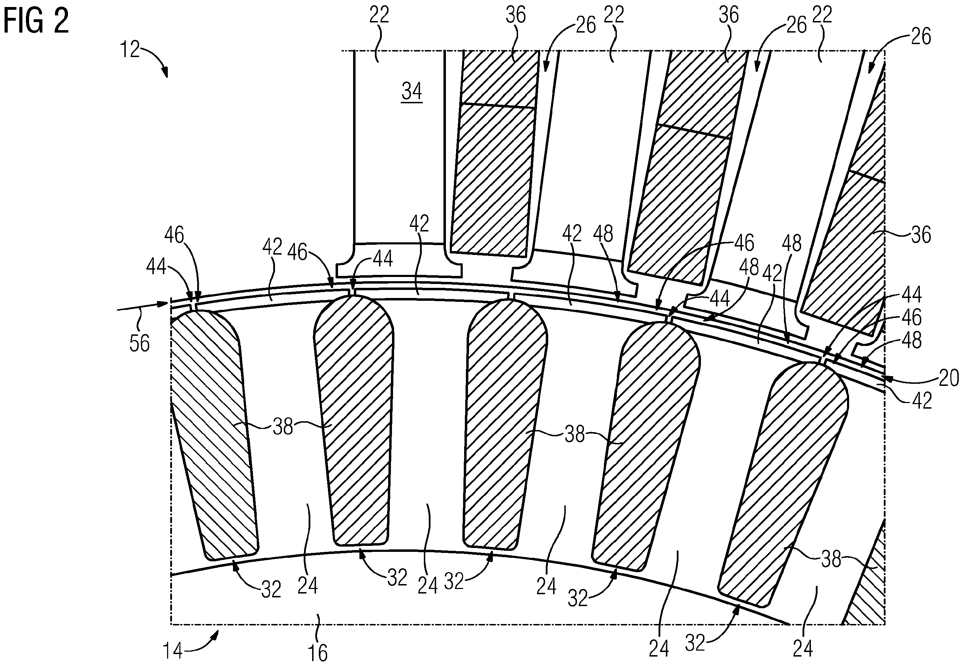

FIG 2 zeigt in einer schematischen Schnittdarstellung quer zur Drehachse 30 einen Ausschnitt des gegenüber dem Ständer 12 drehbar gelagerten Läufers 14. Zu erkennen ist, dass der Ständer 12 das Ständerblechpaket 34 umfasst, welches die Zähne 22 in Umfangsrichtung 56 bereitstellt, die die ständerseitigen Nuten 26 bilden, in denen der elektrische Leiter 36 angeordnet ist. Diese Darstellung ist lediglich schematisch. Der elektrische Leiter 36 kann durch eine Mehrzahl von Einzelleitern gebildet sein, die je nach Bedarf ausgebildet sein können, beispielsweise stabförmig, bandförmig und/oder dergleichen. Entsprechend können auch Querschnitte der Leiter 36 ausgebildet sein.

Aus FIG 2 ist ersichtlich, dass dem Grunde nach das gleiche auch für den Läufer 14 gilt. Der Läufer 14 umfasst das Läuferblechpaket 16, welches in Umfangsrichtung 56 läuferseitige Zähne 24 bereitstellt, die läuferseitige Nuten 32 ausbilden. In den läuferseitigen Nuten 32 ist der elektrische Leiter 38 angeordnet. Der elektrische Leiter 38 kann ebenso wie der elektrische Leiter 36 auf der Ständerseite ausgebildet sein.

Wie aus FIG 2 ersichtlich ist, weist das Läuferblechpaket 16 luftspaltseitig eine Abdeckeinheit 42 auf, die vorliegend aus separaten einzelnen Abdeckelementen gebildet ist. Die Abdeckeinheit 42 begrenzt die Nuten 32 in radialer Richtung. Zugleich stellt die Abdeckeinheit 42 für jede der Nuten 32 einen jeweiligen Nutenspalt 44 bereit, der vorliegend ebenfalls wie der Luftspalt 20 als Luftspalt ausgebildet und mit dem Luftspalt 20 verbunden ist. Der Nutenspalt 44 erstreckt sich in einer Längserstreckungsrichtung der jeweiligen Nut 32. Vorliegend ist die Längserstreckungsrichtung parallel zur Drehachse 30. Bei alternativen Ausgestaltungen kann jedoch eine Schrägung vorgesehen sein.

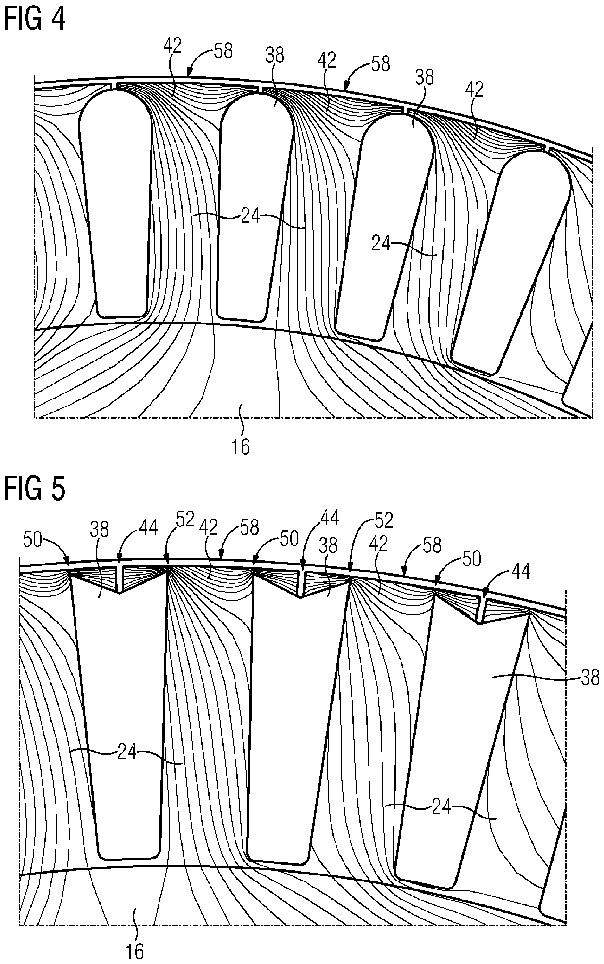

Die Abdeckeinheit 42 weist in einem Bereich einer jeweiligen Nut 32 einen Verjüngungsbereich 46 auf, in welchem ein Material der Abdeckeinheit 42 in einer radialen Richtung des Blechpakets 16 dünner als in einem an diesem Verjüngungsbereich 46 angrenzenden Bereich 48 ist. FIG 4 zeigt in einer schematischen Darstellung basierend auf FIG 2 für den Läufer 14 anhand von Feldlinien 58, wie sich der magnetische Fluss im Läufer 14 im bestimmungsgemäßen Betrieb der Asynchronmaschine 10 ausbildet. Zu erkennen ist, dass eine besonders hohe magnetische Flussdichte im Bereich der Nutenspalte 44 auftritt. Diese Flusskonzentration führt zur Ausbildung einer Drehmomentwelligkeit, die häufig unerwünscht ist.

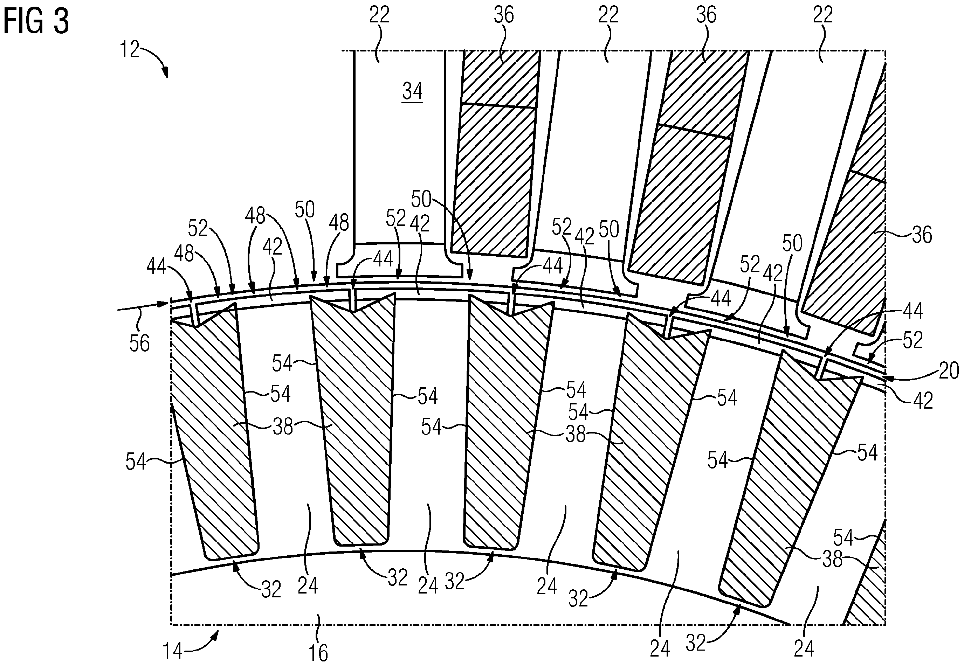

FIG 3 zeigt nun in einer schematischen Darstellung, wie FIG 2, eine Gestaltung der Abdeckeinheit 42, die es erlaubt, die Drehmomentwelligkeit gemäß der Ausgestaltung nach FIG 2 zu reduzieren. Im Folgenden werden lediglich die Unterschiede der Ausgestaltung gemäß FIG 3 gegenüber der Ausgestaltung gemäß FIG 2 erläutert.

Aus FIG 3 ist ersichtlich, dass die Abdeckeinheit 42 gegenüber der Abdeckeinheit 42 gemäß FIG 2 anders gestaltet ist. Die Abdeckeinheit 42 gemäß FIG 3 stellt nämlich - im Unterschied zur Abdeckeinheit 42 gemäß FIG 2 - nunmehr für den Bereich der jeweiligen Nut 32 jeweils zwei in Umfangsrichtung 56 des Blechpakets 16 voneinander beabstandete Verjüngungsbereiche 50, 52 bereit. Die weiteren konstruktiven Merkmale entsprechen im Wesentlichen dem, was bereits zur FIG 2 erläutert wurde, weshalb ergänzend auf die diesbezüglichen Ausführungen verwiesen wird.

Durch diese Gestaltung der Abdeckeinheit 42 kann erreicht werden, dass nunmehr zwei Verjüngungsbereiche 50, 52 für jede der Nuten 32 bereitgestellt werden, so dass sich auch der magnetische Fluss im bestimmungsgemäßen Betrieb der Asynchronmaschine 10 entsprechend verändert. Dies ist schematisch anhand von FIG 5 dargestellt.

Erkennbar ist aus FIG 5, dass sich der magnetische Fluss nunmehr an den beiden Verjüngungsbereichen 50, 52 der Abdeckeinheit 42 konzentriert. Dadurch erhöht sich die Anzahl der mit einer großen Flussdichte beaufschlagten Bereiche, wodurch infolge die Drehmomentwelligkeit insgesamt reduziert werden kann. Dies zeigt auch, dass durch eine weitere Erhöhung der Anzahl der Verjüngungsbereiche für eine jeweilige Nut 32 die Drehmomentwelligkeit noch weiter reduziert werden kann.

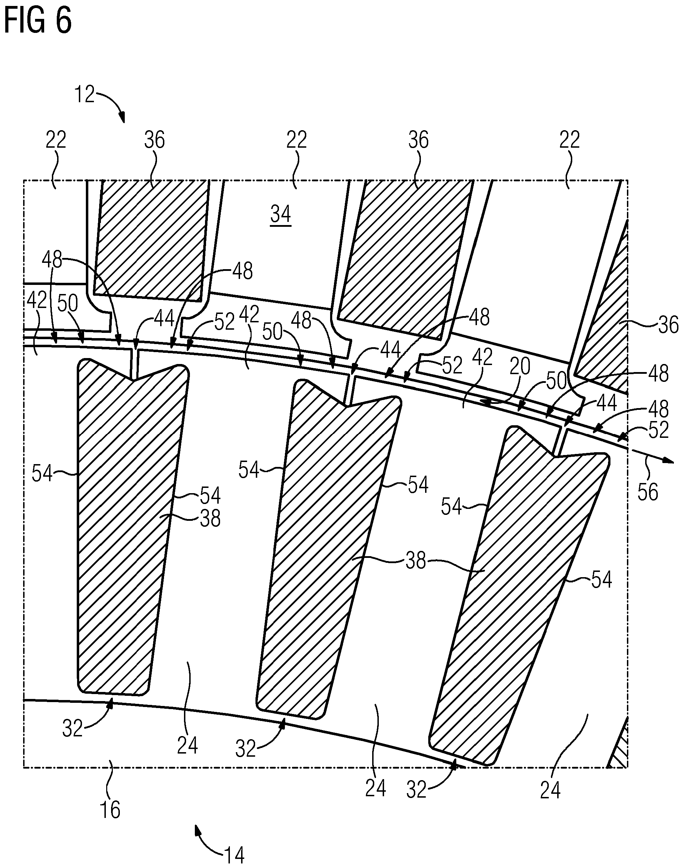

In FIG 3 sind die Verjüngungsbereiche 50, 52 durch eine eckige Gestaltung der Abdeckeinheit 42 realisiert. FIG 6 zeigt in einer schematischen Darstellung, wie FIG 3, eine alternative Ausgestaltung, bei der die Verjüngungsbereiche 50, 52 eine runde Kontur aufweisen. Hierdurch können eine verbesserte Stabilität und gegebenenfalls auch eine verbesserte Führung des magnetischen Flusses erreicht werden. Die Wirkung ist jedoch dem Grunde nach mit der Wirkung der Ausgestaltung anhand von FIG 3 vergleichbar, weshalb diesbezüglich auf die entsprechenden Ausführungen verwiesen wird.

In der folgenden Tabelle sind Vergleichswerte für eine vorgegebene Asynchronmaschine dargestellt.

| | Neue Nut (Erfindung) | Standard | Verhältnis Neu/Standard | Neue Nut hochgerechnet |
|---|---|---|---|---|
| n[1/min] | 4000 | 4000 | | 4000 |
| I1 [A] | 57.7 | 57.7 | | 57.7 |
| S [%] | 1.95 | 1.95 | | 1.95 |
| M[Nm] | 63.93 | 65.85 | | 66.16 |
| Pv solid[W] | 628 | 698 | 90% | |
| Pv_Fe[W] | 503 | 552 | 91% | |

| | | | | |
|---|---|---|---|---|
| M wellSS [Nm] | 5 | 9 | 56% | |
| M wellSS[%] | 7.82 | 13.67 | 57% | |
| I2 [ASS] | 430 | 445 | | 445 |
| | | | | |
| n[1/min] | 750 | 750 | | 750 |
| I1 [A] | 117.2 | 117.2 | | 117.2 |
| S [%] | 4.33 | 4.33 | | 4.33 |
| M[Nm] | 524.2 | 539.9 | | 544.62 |
| Pv solid[W] | 1803 | 1835 | 98% | |
| Pv Fe [W] | 281 | 292 | 96% | |
| M wellSS [Nm] | 10 | 61 | 16% | |
| M wellSS[%] | 1.91 | 11.30 | 17% | |
| I2 [ASS] | 770 | 800 | | 800 |

In der voranstehenden Tabelle sind zwei Betriebszustände, die sich durch eine jeweilige Drehzahl voneinander unterscheiden, von einer Asynchronmaschine gemäß der Erfindung und von einer Asynchronmaschine gemäß dem Stand der Technik im Vergleich dargestellt. Die in der Tabelle benutzten Akronyme sind wie folgt zugeordnet:
- n: Drehzahl
- I1: Ständerstrom
- s: Schlupf
- M: Abtriebsdrehmoment
- Pv_solid: ohm'sche Verluste
- Pv_FE: Eisenverluste
- M_wellSS: Drehmomentenwelligkeit (Spitze-Spitze)
- I2: Läuferstrom (Spitze-Spitze)

Der Schlupf bezieht sich auf ein Verhältnis der Läuferfrequenz zur Ständerfrequenz.

Aus der Tabelle ist ersichtlich, dass durch das erfindungsgemäße Blechpaket die Leistungsfähigkeit der Asynchronmaschine vergrößert werden kann, ohne dass deren äußere Abmessungen vergrößert zu werden brauchen. Dadurch kann bei gleicher Baugröße eine verbesserte Leitungsfähigkeit der Asynchronmaschine erreicht werden. Auch wenn die Tabelle diesen Sachverhalt lediglich für eine beispielhafte Asynchronmaschine zeigt, können auch bei anderen elektrischen Maschinen entsprechende Vorteile durch die Erfindung erreicht werden.

Die in den Figuren dargestellten Ausführungsbeispiele dienen ausschließlich der Erläuterung der Erfindung und sollen diese nicht beschränken. Die Erfindung wird somit durch die beigefügten Ansprüche definiert.

## Patentansprüche

1. Blechpaket (16, 34) für einen Läufer (14) und/oder einen Ständer (12) einer einen Luftspalt (20) zwischen dem Läufer (14) und dem Ständer (12) aufweisenden rotierenden elektrischen Maschine (140), mit
- in einer Umfangsrichtung (56) des Blechpakets (16, 34) nebeneinander angeordneten Zähnen (22, 24), welche Nuten (26, 32) zur Aufnahme von wenigstens einem wenigstens eine Wicklung bildenden elektrischen Leiter (36, 38) begrenzen, und
- einer luftspaltseitig angeordneten Abdeckeinheit (42), die die Nuten (32) in radialer Richtung begrenzt, wobei die Abdeckeinheit (42) in einem Bereich der jeweiligen Nut (32) wenigstens einen Verjüngungsbereich (46) aufweist, in welchem ein Material der Abdeckeinheit (42) in einer radialen Richtung des Blechpakets (16) dünner als in einem an diesen Verjüngungsbereich (46) angrenzenden Bereich (48) der Abdeckeinheit (42) ist,
wobei
das Material der Abdeckeinheit dem Material des Blechpakets entspricht,
wobei im Bereich der jeweiligen Nut (32) wenigstens zwei in Umfangsrichtung (56) des Blechpakets (16) voneinander beabstandete Verjüngungsbereiche (50, 52) ausgebildet sind,
**dadurch gekennzeichnet, dass**
in einem axialen Querschnitt durch
das Blechpaket (16, 34) die jeweilige Nut (32) luftspaltseitig durch zwei gleich lange Schenkel eines gedachten gleichschenkligen Dreiecks begrenzt ist, wobei Ecken einer Basis des gedachten Dreiecks kongruent mit luftspaltseitigen Ecken der jeweiligen Nut (32) sind und eine Höhe des gedachten Dreiecks parallel und partiell identisch zu einer geometrischen radialen Schwerpunktlinie der jeweiligen Nut (32) in dem axialen Querschnitt verläuft, und wobei eine Spitze des gedachten Dreiecks vom Luftspalt (20) weg zeigt.

2. Blechpaket nach Anspruch 1, **dadurch gekennzeichnet, dass** die Abdeckeinheit (42) jeweils wenigstens einen der wenigstens zwei Verjüngungsbereiche (50, 52) in einem Bereich einer jeweiligen sich radial und in einer Längsrichtung des Blechpakets (16) erstreckenden Nutenwand (54) einer jeweiligen Nut (32) aufweist.

3. Blechpaket nach einem der vorhergehenden Ansprüche, **dadurch gekennzeichnet, dass** die Abdeckeinheit (42) luftspaltseitig für jede der Nuten (32) einen Nutenspalt (44) aufweist, der sich in einer Längserstreckungsrichtung der jeweiligen Nut (32) erstreckt, wobei die Abdeckeinheit (42) den Nutenspalt (44) der jeweiligen Nut (32) vorzugsweise mittig in Bezug auf eine Breite der Nut (32) in Umfangsrichtung (56) aufweist.

4. Blechpaket nach einem der vorhergehenden Ansprüche, **dadurch gekennzeichnet, dass** die Verjüngungsbereiche (50, 52) durch eine eckige Kontur der Abdeckeinheit (42) ausgebildet sind.

5. Blechpaket nach einem der vorhergehenden Ansprüche, **dadurch gekennzeichnet, dass** die Verjüngungsbereiche (50, 52) durch eine kurvige Kontur der Abdeckeinheit (42) ausgebildet sind.

6. Blechpaket nach einem der vorhergehenden Ansprüche, **dadurch gekennzeichnet, dass** das Material der Abdeckeinheit (42) in der radialen Richtung des Blechpakets (16) im Bereich der Verjüngungsbereiche (50, 52) einer jeweiligen Nut (32) dünner als in einem Bereich des Nutspalts (44) für diese Nut (32) ist.

7. Blechpaket nach einem der vorhergehenden Ansprüche, **dadurch gekennzeichnet, dass** das Material der Abdeckeinheit (42) zumindest in den Verjüngungsbereichen (50, 52) eine kleinere ferromagnetische Permeabilität als die Zähne aufweist.

8. Blechpaket nach einem der vorhergehenden Ansprüche, **dadurch gekennzeichnet, dass** in einem axialen Querschnitt durch das Blechpaket (16, 34) eine luftspaltseitige Begrenzung der jeweiligen Nut (32) V-förmig ausgeformt ist und eine radiale Ausdehnung der jeweiligen Nut (32) zu den Rändern der V-förmigen Begrenzung hin zunimmt.

9. Blechpaket nach einem der vorhergehenden Ansprüche, **dadurch gekennzeichnet, dass** die Begrenzung an dem gedachten Dreieck beziehungsweise die luftspaltseitige Begrenzung der jeweiligen Nut (32) teilweise oder vollständig durch die Abdeckeinheit (42) bereitgestellt ist.

10. Blechpaket nach einem der vorhergehenden Ansprüche, **dadurch gekennzeichnet, dass** in einem axialen Querschnitt durch das Blechpaket (16, 34) die Abdeckeinheit (42) im Bereich der jeweiligen Nut (32) zumindest näherungsweise entsprechend eines Dreiecks, optional unterbrochen durch einen in radialer und axialer Richtung ausgerichteten Nutenspalt (44), ausgestaltet ist, wobei eine Seite des Dreiecks zumindest im Wesentlichen parallel zu der Umfangsrichtung (56) des Blechpakets (16, 34) verläuft und zwei andere Seiten des Dreiecks in die jeweilige Nut (32) hineinzeigen.

11. Blechpaket nach Anspruch 10, **dadurch gekennzeichnet, dass** Dreieck ein gleichschenkliges Dreieck ist und eine Basis des gleichschenkligen Dreiecks parallel zu der Umfangsrichtung (56) des Blechpakets (16, 34) verläuft und zwei Schenkel des Dreiecks in die jeweilige Nut (32) hineinzeigen, wobei insbesondere der Nutenspalt (44) parallel und partiell deckungsgleich zur Höhe des Dreiecks verläuft.

12. Ständer (12) für eine rotierende elektrische Maschine (10), mit einem Blechpaket (34) nach einem der vorhergehenden Ansprüche.

13. Läufer (14) für eine rotierende elektrische Maschine (10), mit einem Blechpaket (16) nach einem der Ansprüche 1 bis 12.

14. Rotierende elektrische Maschine (10) mit einem Ständer (12) und einem in einer Öffnung des Ständers (12) drehbar gelagert angeordneten Läufer (14), wobei der Ständer (12) vom Läufer (14) durch einen Luftspalt (20) beabstandet ist, **dadurch gekennzeichnet, dass** der Ständer (12) nach Anspruch 12 und/oder der Läufer (14) nach Anspruch 13 ausgebildet ist.

## Claims

1. Laminated core (16, 34) for a rotor (14) and/or a stator (12) of a rotating electric machine (140) having an air gap (20) between the rotor (14) and the stator (12), with
- teeth (22, 24) which are arranged adjacent to one another in a peripheral direction (56) of the laminated core (16, 34) and delimit slots (26, 32) for accommodating at least one electrical conductor (36, 38) that forms at least one winding, and
- a cover unit (42) arranged on the air gap side which delimits the slots (32) in the radial direction, wherein the cover unit (42) has at least one tapering region (46) in a region of the respective slot (32), in which a material of the cover unit (42) is thinner in a radial direction of the laminated core (16) than in a region (48) of the cover unit (42) adjoining said tapering region (46),
wherein the material of the cover unit corresponds to the material of the laminated core, wherein, in the region of the respective slot (32), at least two tapering regions (50, 52) are formed, which are spaced apart from one another in the peripheral direction (56) of the laminated core (16), **characterised in that**, in an axial cross-section through the laminated core (16, 34), the respective slot (32) is delimited on the air gap side by two equally long legs of a notional isosceles triangle, wherein corners of a base of the notional triangle are congruent with air-gap-side corners of the respective slot (32) and a height of the notional triangle runs in parallel with and partially identically to a geometric radial line of gravity of the respective slot (32) in the axial cross-section, and wherein a tip of the notional triangle points away from the air gap (20).

2. Laminated core according to claim 1, **characterised in that** the cover unit (42) in each case has at least one of the at least two tapering regions (50, 52) in a region of a respective slot wall (54) of a respective slot (32) which extends radially and in a longitudinal direction of the laminated core (16).

3. Laminated core according to one of the preceding claims, **characterised in that** the cover unit (42) has a slot gap (44), which extends in a longitudinal extension direction of the respective slot (32), on the air gap side for each of the slots (32), wherein the cover unit (42) preferably has the slot gap (44) of the respective slot (32) in the middle with regard to a width of the slot (32) in the peripheral direction (56) .

4. Laminated core according to one of the preceding claims, **characterised in that** the tapering regions (50, 52) are embodied by an angular contour of the cover unit (42).

5. Laminated core according to one of the preceding claims, **characterised in that** the tapering regions (50, 52) are embodied by a curved contour of the cover unit (42).

6. Laminated core according to one of the preceding claims, **characterised in that** the material of the cover unit (42) in the radial direction of the laminated core (16) is thinner in the region of the tapering regions (50, 52) of a respective slot (32) than in a region of the slot gap (44) for said slot (32) .

7. Laminated core according to one of the preceding claims, **characterised in that** the material of the cover unit (42) has a lower ferromagnetic permeability than the teeth, at least in the tapering regions (50, 52).

8. Laminated core according to one of the preceding claims, **characterised in that**, in an axial cross-section through the laminated core (16, 34), an air-gap-side delimitation of the respective slot (32) is shaped in a V-like manner and a radial widening of the respective slot (32) increases toward the edges of the V-shaped delimitation.

9. Laminated core according to one of the preceding claims, **characterised in that** the delimitation at the notional triangle or the air-gap-side delimitation of the respective slot (32) is partially or fully provided by the cover unit (42) .

10. Laminated core according to one of the preceding claims, **characterised in that**, in an axial cross-section through the laminated core (16, 34), the cover unit (42) in the region of the respective slot (32) is shaped at least approximately in a manner corresponding to a triangle, optionally interrupted by a slot gap (44) oriented in the radial and axial direction, wherein one side of the triangle runs at least substantially in parallel with the peripheral direction (56) of the laminated core (16, 34) and two other sides of the triangle point into the respective slot (32).

11. Laminated core according to claim 10, **characterised in that** the triangle is an isosceles triangle and a base of the isosceles triangle runs in parallel with the peripheral direction (56) of the laminated core (16, 34) and two limbs of the triangle point into the respective slot (32), wherein in particular the slot gap (44) runs in parallel with and partially coinciding with the height of the triangle.

12. Stator (12) for a rotating electric machine (10), with a laminated core (34) according to one of the preceding claims.

13. Rotor (14) for a rotating electric machine (10), with a laminated core (16) according to one of claims 1 to 12.

14. Rotating electric machine (10) with a stator (12) and a rotor (14) that is arranged such that it is rotatably mounted in an opening of the stator (12), wherein the stator (12) is spaced apart from the rotor (14) by an air gap (20), **characterised in that** the stator (12) is embodied according to claim 12 and/or the rotor (14) is embodied according to claim 13.

## Revendications

1. Paquet (16, 34) de tôles d'un rotor (14) et/ou d'un stator (12) d'une machine (140) électrique tournante, comportant un entrefer (20) entre le rotor (14) et le stator (12), comprenant
- dans une direction (56) du pourtour du paquet (16, 34) de tôles, des dents (22, 24) disposées les unes à côté des autres, lesquelles délimitent des encoches (26, 32) de réception d'au moins un conducteur (36, 38) électrique formant au moins un enroulement, et
- une unité (42) de recouvrement, qui est disposée du côté de l'entrefer et qui délimite les encoches (32) dans une direction radiale, dans lequel l'unité (42) de recouvrement a, dans une partie de l'encoche (32) respective, au moins une partie (46) d'amincissement, dans laquelle un matériau de l'unité (42) de recouvrement est, dans une direction radiale du paquet (16) de tôles, plus mince que dans une partie (48) de l'unité (42) de recouvrement voisine de cette partie (46) d'amincissement,
dans lequel le matériau de l'unité de recouvrement correspond au matériau du paquet de tôles,
dans lequel, dans la partie de l'encoche (32) respective, sont constituées au moins deux parties (50, 52) d'amincissement à distance l'une de l'autre dans la direction (56) du pourtour du paquet (16) de tôles,
**caractérisé en ce que**
dans une coupe transversale axiale du paquet (16, 34) de tôles, l'encoche (32) respective est délimitée du côté de l'entrefer par deux côtés de même longueur d'un triangle isocèle imaginaire, dans lequel des sommets d'une base du triangle imaginaire sont congruents avec des sommets, du côté de l'entrefer, de l'encoche (32) respective et une hauteur du triangle imaginaire s'étend parallèlement et partiellement, de manière identique, à une ligne de centre de gravité radiale géométrique de l'encoche (32) respective dans la coupe transversale axiale, et dans lequel une pointe du triangle imaginaire pointe en s'éloignant de l'entrefer (20) .

2. Paquet de tôles suivant la revendication 1, **caractérisé en ce que** l'unité (42) de recouvrement a respectivement au moins l'une des au moins deux parties (50, 52) d'amincissement dans une partie d'une paroi (54) d'une encoche de l'encoche (32) respective s'étendant radialement et dans une direction longitudinale du paquet (16) de tôles.

3. Paquet de tôles suivant l'une des revendications précédentes, **caractérisé en ce que** l'unité (42) de recouvrement a, du côté de l'entrefer pour chacune des encoches (32), un intervalle (44) d'encoche, qui s'étend dans une direction d'étendue longitudinale de l'encoche (32) respective, dans lequel l'unité (42) de recouvrement a l'intervalle (44) d'encoche (32) respective, de préférence au milieu par rapport à une largeur de l'encoche (32) dans la direction (56) du pourtour.

4. Paquet de tôles suivant l'une des revendications précédentes, **caractérisé en ce que** les parties (50, 52) d'amincissement sont constituées par un contour polygonal de l'unité (42) de recouvrement.

5. Paquet de tôles suivant l'une des revendications précédentes, **caractérisé en ce que** les parties (50, 52) d'amincissement sont constituées par un contour incurvé de l'unité (42) de recouvrement.

6. Paquet de tôles suivant l'une des revendications précédentes, **caractérisé en ce que** le matériau de l'unité (42) de recouvrement est, dans la direction radiale du paquet (16) de tôles, plus mince dans la partie des parties (50, 52) d'amincissement d'une encoche (32) respective que dans une partie de l'intervalle (44) d'encoche (32).

7. Paquet de tôles suivant l'une des revendications précédentes, **caractérisé en ce que** le matériau de l'unité (42) de recouvrement a, au moins dans les parties (50, 52) d'amincissement, une perméabilité ferromagnétique plus petite que les dents.

8. Paquet de tôles suivant l'une des revendications précédentes, **caractérisé en ce que**, dans une coupe transversale axiale du paquet (16, 34) de tôles, une délimitation du côté de l'entrefer de l'encoche (32) respective est en forme de V et une étendue radiale de l'encoche (32) respective augmente vers les bords de la délimitation en forme de V.

9. Paquet de tôles suivant l'une des revendications précédentes, **caractérisé en ce que** la délimitation sur le triangle imaginaire ou respectivement la délimitation du côté de l'entrefer de l'encoche (32) respective est donnée en tout ou partie par l'unité (42) de recouvrement.

10. Paquet de tôles suivant l'une des revendications précédentes, **caractérisé en ce que**, dans une coupe transversale axiale du paquet (16, 34) de tôles, l'unité (42) de recouvrement est, dans la partie de l'encoche (32) respective, conformée au moins a peu près conformément à un triangle, éventuellement interrompue par un intervalle (44) d'encoche, dirigée dans une direction radiale et axiale, dans lequel un côté du triangle s'étend au moins sensiblement parallèlement à la direction (56) du pourtour du paquet (16, 34) de tôles et deux autres côtés du triangle pointent dans l'encoche (32) respective.

11. Paquet de tôles suivant la revendication 10, **caractérisé en ce que** le triangle est un triangle isocèle et une base du triangle isocèle s'étend parallèlement à la direction (56) du pourtour du paquet (16, 34) de tôles et deux côtés du triangle pointent dans l'encoche (32) respective, dans lequel, en particulier l'intervalle (44) d'encoche s'étend parallèlement et partiellement en coïncidence avec la hauteur du triangle.

12. Stator (12) d'une machine (10) électrique tournante, comprenant un paquet (34) de tôles suivant l'une des revendications précédentes.

13. Rotor (14) d'une machine (10) électrique tournante, comprenant un paquet (16) de tôles suivant l'une des revendications 1 à 12.

14. Machine (10) électrique tournante comprenant un stator (12) et un rotor (14) monté tournant dans une ouverture du stator (12), dans lequel le stator (12) est à distance du rotor (14) par un entrefer (20), **caractérisé en ce que** le stator (12) est constitué suivant la revendication 12 et/ou le rotor (14) est constitué suivant la revendication 13.
